(19)

Europäisches Patentamt

European Patent Office

Office européen des brevets

(11) Veröffentlichungsnummer: **0 197 326**
**A2**

(12) EUROPÄISCHE PATENTANMELDUNG

(21) Anmeldenummer: 86103124.3

(22) Anmeldetag: 08.03.86

(51) Int. Cl.4: **C01B 25/32 , C01F 11/18**

(30) Priorität: 23.03.85 DE 3510694

(43) Veröffentlichungstag der Anmeldung:
15.10.86 Patentblatt 86/42

(84) Benannte Vertragsstaaten:
AT BE CH DE FR GB IT LI NL SE

(71) Anmelder: HOECHST AKTIENGESELLSCHAFT
Postfach 80 03 20
D-6230 Frankfurt am Main 80(DE)

(72) Erfinder: Cremer, Josef, Dr.
Karl-Schurz-Strasse 6
D-5030 Hürth(DE)
Erfinder: Holz, Josef
Theodor-Heuss-Strasse 3
D-5042 Erftstadt(DE)

(54) Verfahren zur Herstellung von Calciumhydrogenphosphat.

(57) Die vorliegende Erfindung betrifft ein Verfahren zur Herstellung von Calciumhydrogenphosphat großer Reinheit und mit hohem Weißgrad aus reiner Phosphorsäure und verunreinigtem Kalk-Hydrat, wobei eine Calciumhydroxidaufschlämmung mit Ammonium-oder Aminsalz umgesetzt wird und nach Klärung der Calciumsalzlösung mit Aktivkohle durch Einleiten von Kohlendioxid Calciumcarbonat gefällt wird, welches in einer wäßrigen Phase aufgeschlämmt und mit reiner Phosphorsäure zu Calcium-hydrogenphosphat umgesetzt wird.

EP 0 197 326 A2

## Verfahren zur Herstellung von Calciumhydrogenphosphat

Die vorliegende Erfindung betrifft ein Verfahren zur Herstellung von Calciumhydrogenphosphat großer Reinheit und mit hohem Weißgrad aus reiner Phosphorsäure und verunreinigtem Kalk-Hydrat.

Nach dem Vorschlag der DE-AS 1 216 264 ist es zur Herstellung von Calciumhydrogenphosphatdihydrat mit hohem Weißgrad erforderlich, entsprechend hochwertige Ausgangsstoffe einzusetzen. Neben dem Einsatz reiner Phosphorsäure werden als zweiter Ausgangsstoff vielfach ausgesuchte, reine mineralische Calciumcarbonate oder daraus hergestellte Calciumhydroxide benötigt. Als Calciumsalz kann auch ein gefälltes Calciumcarbonat, hergestellt durch eine Behandlung von Calciumhydroxid mit $CO_2$, oder ein Calciumcarbonat eingesetzt werden, das durch Konvertierung von Calciumnitrat, welches beispielsweise bei der Herstellung von hochprozentigen Volldüngern durch Aufschluß von Rohphosphat mit Salpetersäure anfällt, mittels $NH_3$ und $CO_2$ erhalten werden kann. Hierzu ist es erforderlich, das Calciumnitrat einer weiteren Reinigungsstufe zu unterziehen und das ausgefällte grobkörnige Calciumcarbonat in einer Mahlstufe vor der Umsetzung mit Phosphorsäure aufzumahlen.

Nachteilig ist bei der Verwendung natürlicher Calciumcarbonate oder daraus hergestellter Calciumhydroxide, daß die zur Herstellung von Calciumhydrogenphosphaten großer Reinheit und mit hohem Weißgrad eingesetzten Calciummineralien in der erforderlichen Reinheit in der Natur nur in geringen Mengen vorkommen.

Weiterhin ist die Gewinnung von reinen Calciumcarbonaten durch Behandlung von Calciumhydroxid mit $CO_2$ oder durch Konvertierung von Calciumnitrat mit $NH_3$ und $CO_2$ aufwendig und fordert ihren Preis. Schließlich ist beim Verfahren nach der DE-AS 1 216 264 von Nachteil, daß dabei zwangsläufig Natriumchlorid-Lösung anfällt, deren Beseitigung eine ständige Belastung des Abwassers bedeutet.

In der DE-AS 1 142 851 wird die Herstellung von Calciumcarbonat beschrieben, das durch eine Fällungsreaktion in Gegenwart von löslichen Fluoriden oder Silikofluoriden erhalten wird. Dieses Verfahren hat den Nachteil, daß von einer reinen Calciumsalzlösung ausgegangen werden muß und Fluorid in das Calciumcarbonat eingebaut wird, wobei dieser Fluorgehalt auch in dem Calciumhydrogenphosphat verbleibt.

In der DE-AS 1 116 203 ist schließlich vorgeschlagen worden, Calciumcarbonat in Gegenwart eines Alkali-oder Erdalkalisalzes der Nitrilotriessigsäure auszufällen. Hier muß ebenfalls von einer chemisch reinen Calciumhydroxidaufschlämmung ausgegangen werden, da keine Reinigungsstufe möglich ist. Hinzu kommt, daß Nitrilotriessigsäure relativ teuer ist und die Mutterlauge zu Abwasserproblemen Anlaß gibt.

Es war nunmehr die Aufgabe gestellt, ein Calciumhydrogenphosphat großer Reinheit und mit hohem Weißgrad aus reiner Phosphorsäure und verunreinigtem Kalk-Hydrat, insbesondere .aus Karbidkalk-Hydrat-Aufschlämmungen, einem Abfallprodukt der elektrothermischen Acetylenerzeugung, zu gewinnen, wobei durch eine Ammonsalzbehandlung der Kalk-Hydrat-Aufschlämmung und anschließende Calciumcarbonatfällung mittels Kohlendioxid ein reines Calciumcarbonat in feinteiliger Form als Zwischenprodukt erhalten wird. Bei dieser Produktion unterbleibt eine Umweltbelastung durch anfallende Mutterlauge weitgehend.

Die vorliegende Erfindung betrifft somit ein Verfahren zur Herstellung von Calciumhydrogenphosphat großer Reinheit mit hohem Weißgrad aus reiner Phosphorsäure und verunreinigtem Kalk-Hydrat, das dadurch gekennzeichnet ist, daß in einem ersten Verfahrensschritt eine wäßrige Calciumhydroxidaufschlämmung mit Ammonium- oder Aminsalz umgesetzt wird, in einem zweiten Verfahrensschritt die gebildete Calcimsalzlösung von Ungelöstem befreit wird, in einem dritten Verfahrensschritt die Calciumsalzlösung mit Aktivkohle geklärt wird, in einem vierten Verfahrensschritt aus der Calciumsalzlösung durch Einleiten von Kohlendioxid Calciumcarbonat gefällt wird, in einem fünften Verfahrensschritt das Calciumcarbonat von der Mutterlauge abgetrennt wird, in einem sechsten Verfahrensschritt das Calciumcarbonat mit Wasser gewaschen wird, in einem siebten Verfahrensschritt das Calciumcarbonat in einer wäßrigen Phase aufgeschlämmt und mit reiner Phosphorsäure zu Calciumhydrogenphosphat umgesetzt wird, das dann in bekannter Weise abfiltriert und getrocknet wird.

Das Verfahren ist weiter dadurch gekennzeichnet, daß als Ammoniumsalz $NH_4NO_3$, $NH_4Cl$ oder $HCO_2NH_4$ und als Aminsalze die Chloride von kurzkettigen primären oder sekundären Aminen in fester oder in in Wasser gelöster Form verwendet werden.

Gute Löseausbeuten werden erzielt, wenn in der ersten Stufe (Lösestufe) ein äquivalentes Verhältnis von $Ca : NH_4^+ = 1 : 2,0$ bis $2,2$ oder von $Ca : R_1NH_3^+ = 1 : 2,0$ bis $2,2$ oder von $Ca : R_1R_2NH_2^+ = 1 : 2,0$ bis $2,2$ eingestellt wird.

Es ist zweckmäßig, wenn in der ersten Stufe (Lösestufe) die Umsetzung des Ammonium-oder Aminsalzes mit der Calciumhydroxidaufschlämmung in der 1-bis 11-fachen, insbesondere 3-bis 6-fachen Gewichtsmenge Wasser erfolgt, bezogen auf die eingesetzte Menge wasserfreies Kalk-Hydrat.

Erfindungsgemäß wird in der dritten Stufe die Calciumsalzlösung mit 0,1 bis 3,0 Gewichts% Aktivkohle, bezogen auf die eingesetzte Menge wasserfreies Kalk-Hydrat, geklärt. Es hat sich als günstig erwiesen, wenn nach Abtrennung des Calciumcarbonats von der gebildeten Mutterlauge in der fünften Stufe das Calciumcarbonat in der sechsten Stufe mit der 1-bis 5-fachen Wassermenge, bezogen auf die Calciumcarbonatmenge, gewaschen wird. Ein besonders umweltschonendes Verfahren liegt vor, wenn die in der vierten Stufe -(Fällstufe) gebildete Mutterlauge rückgeführt wird in die erste Stufe (Lösestufe) zur erneuten Umsetzung mit Kalk-Hydrat.

Besondere Vorteile treten bei den erfindungsgemäßen Verfahren hervor, wenn verunreinigte Calciumhydroxid-bzw. Kalk-Hydrat-Aufschlämmungen -insbesondere aus Karbidkalk-Hydrat, einem Nebenprodukt der elektrothermischen Acetylenerzeugung aus Kalk und Kohle -als Ausgangsprodukt verarbeitet werden.

Besonders gute Produkteigenschaften werden erzielt, wenn in der siebten Stufe als Phosphorsäure eine solche eingesetzt wird, die durch Verbrennung von Phosphor erhalten wurde, und wenn das Calciumcarbonat vor der Umsetzung mit Phosphorsäure in der siebten Stufe in der 1-bis 1o-fachen, insbesondere der 2-bis 5-fachen Gewichtsmenge wäßriger Phase aufgeschlämmt wird.

Das erfindungsgemäße Verfahren beinhaltet ferner, daß zur Umsetzung des Calciumcarbonats mit der Phosphorsäure in der siebten Stufe zunächst eine verdünnte Phosphorsäurevorlage hergestellt wird und durch gleichzeitiges Zugeben von Calciumcarbonataufschlämmung und Phosphorsäure ein pH-Wert zwischen 2 -4,5 eingehalten wird.

Gute Produkteigenschaften werden auch dann erzielt, wenn zur Herstellung der Phosphorsäurevorlage eine handelsübliche 85 %ige $H_3PO_4$ mit der Mutterlauge der Calciumhydro genphosphatfällung im Gewichtsverhältnis 1 : 10 bis 25 verdünnt wird, und wenn als wäßrige Phase für die Herstellung der Calciumcarbonataufschlämmung in der siebten Stufe die Mutterlauge aus der Calciumhydrogenphosphatfällung eingesetzt wird.

Wahlweise kann die Umsetzung von Calciumcarbonat und Phosphorsäure zur Herstellung von $CaHPO_4 . 2H_2O$ bei einer Temperatur von 0 bis 6o°C, insbesondere bei 10 bis 50°C, oder zur Herstellung von $CaHPO_4$ bei einer Temperatur oberhalb von 60°C, insbesondere bei 7o bis 9o°C, erfolgen. Unter der Bezeichnung Calciumhydrogenphosphat ist somit die wasserfreie Modifikation $CaHPO_4$ und die kristallwasserhaltige Modifikation $CaHPO_4 . 2H_2O$ zu verstehen.

Bei der Calciumhydrogenphosphat-Waschung anfallendes Waschwasser wird vorzugsweise, eventuell nach einer Konzentrierung, zur Herstellung der Phosphorsäurevorlage benutzt.

Die Messung des Weißgrades erfolgte mit dem elektrischen Remissionsphotometer® "Elrepho" der Fa. Carl Zeiss, Oberkochen, Filter R 57 (577 nm) im Vergleich zu Calciumcarbonat, Qualität p.A. der Fa. Riedel de Haen AG. Seelze, als Standard -(100 %).

Mit dem erfindungsgemäßen Verfahren ist es nunmehr möglich ein Calciumhydrogenphosphat folgender Spezifikation herzustellen:

Verunreinigungen:

$MgO \leq 0,04$ Gew%

$Al_2O_3 < 0,01$ Gew%

$SiO_2 \leq 0,005$ Gew%

$Mn \leq 0,004$ Gew%

$Fe \leq 0,001$ Gew%

$F \leq 10$ ppm

$Pb < 1$ ppm

$As < 0,5$ ppm

$Cd < 0,2$ ppm

$Hg < 0,05$ ppm

Die nachfolgenden Beispiele dienen zur näheren Erläuterung des erfindungsgemäßen Verfahrens:

Beispiel 1

185 Gew-Teile $NH_4NO_3$ wurden in einem Rührbehälter in 350 Gew-Teilen Wasser gelöst und mit 74 Gew-Teilen Karbidkalk-Hydrat versetzt. Nach 15 Minuten Rührzeit erfolgte eine Abtrennung des Ungelösten mittels einer Druckfiltration bei 1 bar Überdruck. Die resultierende Calciumnitratlösung wurde unter Zusatz von 1 Gew-Teil Aktivkohle gerührt und durch eine Druckfiltration geklärt. Durch die Einleitung von $CO_2$ aus einer Stahlflasche resultierte die Ausfällung von Calciumcarbonat, welche bei einem pH-Wert von 6,5 beendet war. Das ausgefallene Produkt wurde auf einem Vakuumtrommelfilter abgetrennt und mit 85 Gew-Teilen Wasser gewaschen. Die Mutterlauge diente erneut dazu, 74 Gew-Teile Karbidkalk-Hydrat aufzulösen, unlösliche Anteile abzutrennen und das Calcium als Carbonat zu fällen. Insgesamt erfolgte das Recycling 2o mal

In einem Rührbehälter wurden 3oo Gew-Teile Wasser und 15 Gew-Teile 85 %ige thermische $H_3PO_4$ vorgelegt und in die Vorlage gleichzeitig 85 Gew-Teile 85 %ige thermische $H_3PO_4$ und eine Suspension aus dem Karbonat-Filterkuchen nach 2o Recyclingschritten und 15o Gew-Teilen Wasser bei einem pH-Wert von 2,5 zudosiert. Gegen Ende der Reaktion erfolgte eine pH-Wert-Erhöhung auf 4,0. Die Temperatur erhöhte sich bei der Reaktion von 2o°C auf 35°C. Das erhaltene Calciumhydrogenphosphatdihydrat wurde auf einer Nutsche abfiltriert, mit 100 Gew-Teilen Wasser gewaschen und im Trockenschrank bei 55°C getrocknet.

Die analytischen Daten des hergestellten Produktes sind in der nachfolgenden Tabelle zusammengestellt: CaO 32,4 Gew%

$P_2O_5$ 41,1 Gew%

MgO 0,03 Gew%

$Al_2O_3$ 0,007 Gew%

$SiO_2$ 0,004 Gew%

Mn 0,003 Gew%

Fe 0,0007 Gew%

F < 0,001 Gew%

Pb < 1 ppm

As < 0,5 ppm

Cd < 0,2 ppm

Hg < 0,05 ppm

Glühverlust 26,4 %

Weißgrad 99,9 %

Beispiel 2

120 Gew-Teile $NH_4Cl$ wurden in einem Rührbehälter in 400 Gew-Teilen Wasser gelöst, mit 74 Gew-Teilen Karbidkalk-Hydrat versetzt und 15 Minuten gerührt. Die Aufarbeitung erfolgte wie im Beispiel 1, ebenso ein 20maliges Recycling.

In einem Doppelmantel-Rührbehälter mit einer Vorlage aus 300 Gew-Teilen Mutterlauge der Calciumhydrogenphosphat-Fällung aus Beispiel 1 und 15 Gew-Teilen 85 %iger thermischer $H_3PO_4$ wurden bei 80°C gleichzeitig 85 Gew-Teile 85 %ige thermische $H_3PO_4$ und eine Suspension aus dem Calciumcarbonatfilterkuchen nach 20 Recyclingschritten und 150 Gew-Teilen Wasser zudosiert. Dabei betrug der pH-Wert bis kurz vor Reaktionsende 2,5 und wurde dann auf 4,5 erhöht. Das erhaltene Produkt wurde auf einem Vakuumfilter abfiltriert, mit 100 Gew-Teilen Wasser gewaschen und bei 120°C getrocknet.

Die folgende Tabelle zeigt eine Zusammenstellung der analytischen Werte: CaO 41,0 Gew%

$P_2O_5$ 51,9 Gew%

MgO 0,04 Gew%

$Al_2O_3$ 0,009 Gew%

$SiO_2$ 0,005 Gew%

Mn 0,004 Gew%

Fe 0,001 Gew%

F < 0,0015 Gew%

Pb < 1 ppm

As < 0,5 ppm

Cd < 0,2 ppm

Hg < 0,05 ppm

Glühverlust 6,8 %

Weißgrad 99,7 %

**Ansprüche**

1. Verfahren zur Herstellung von Calciumhydrogenphosphat großer Reinheit und mit hohem Weißgrad aus reiner Phosphorsäure und verunreinigtem Kalk-Hydrat, dadurch gekennzeichnet, daß in einem ersten Verfahrensschritt eine wäßrige Calciumhydroxidaufschlämmung mit Ammonium- oder Aminsalz umgesetzt wird, in einem

zweiten Verfahrensschritt die gebildete Calciumsalzlösung von Ungelöstem befreit wird, in einem dritten Verfahrensschritt die Calciumsalzlösung mit Aktivkohle geklärt wird, in einem vierten Verfahrensschritt aus der Calciumsalzlösung durch Einleiten von Kohlendioxid Calciumcarbonat gefällt wird, in einem fünften Verfahrensschritt das Calciumcarbonat von der Mutterlauge abgetrennt wird, in einem sechsten Verfahrensschritt das Calciumcarbonat mit Wasser gewaschen wird, in einem siebten Verfahrensschritt das Calciumcarbonat in einer wäßrigen Phase aufgeschlämmt und mit reiner Phosphorsäure zu Calciumhydrogenphosphat umgesetzt wird, das dann in bekannter Weise abfiltriert und getrocknet wird.

2. Verfahren nach Anspruch 1, dadurch gekennzeichnet, daß als Ammoniumsalz $NH_4NO_3$, $NH_4Cl$ oder $H-CO_2NH_4$ in fester oder in in Wasser gelöster Form verwendet wird.

3. Verfahren nach Anspruch 1, dadurch gekennzeichnet, daß als Aminsalze die Chloride von kurzkettigen primären oder sekundären Aminen in fester oder in in Wasser gelöster Form verwendet werden.

4. Verfahren nach einem der voranstehenden Ansprüche, dadurch gekennzeichnet, daß in der ersten Stufe ein äquivalentes Verhältnis von Ca : $NH_4^+$ = 1 : 2,0 bis 2,2 oder von Ca : $R_iNH_3^+$ = 1 : 2,0 bis 2,2 oder von Ca : $R_iR_2NH_2^+$ = 1 : 2,0 bis 2,2 eingestellt wird.

5. Verfahren nach einem der voranstehenden Ansprüche, dadurch gekennzeichnet, daß in der ersten Stufe (Lösestufe) die Umsetzung der Ammonium-

oder Aminsalzes mit der Calciumhydroxidaufschlämmung in der 1-bis 11-fachen, insbesondere 3-bis 6-fachen Gewichtsmenge Wasser erfolgt, bezogen auf die eingesetzte Menge wasserfreies Kalk-Hydrat.

6. Verfahren nach einem der voranstehenden Ansprüche, dadurch gekennzeichnet, daß in der dritten Stufe die Calciumsalzlösung mit 0,1 bis 3,0 Gew% Aktivkohle, bezogen auf die eingesetzte Menge wasserfreies Kalk-Hydrat, geklärt wird.

7. Verfahren nach einem der voranstehenden Ansprüche, dadurch gekennzeichnet, daß nach Abtrennung des Calciumcarbonats von der gebildeten Mutterlauge in der fünften Stufe das Calciumcarbonat in der sechsten Stufe mit der 1-bis 5-fachen Wassermenge, bezogen auf die Calciumcarbonatmenge, gewaschen wird.

8. Verfahren nach einem der voranstehenden Ansprüche, dadurch gekennzeichnet, daß die in der vierten Stufe (Fällstufe) gebildete Mutterlauge rückgeführt wird in die erste Stufe zur erneuten Umsetzung mit Kalk-Hydrat.

9. Verfahren nach einem der voranstehenden Ansprüche, dadurch gekennzeichnet, daß verunreinigte Calciumhydroxid-bzw. Kalk-Hydrat-Aufschlämmung -insbesondere aus Karbidkalk-Hydrat, einem Nebenprodukt der elektrothermischen Acetylenerzeugung aus Kalk und Kohle -als Ausgangsprodukte verarbeitet wird.

10. Verfahren nach einem der voranstehenden Ansprüche, dadurch gekennzeichnet, daß in der siebten Stufe als Phosphorsäure eine solche eingesetzt wird, die durch Verbrennung von Phosphor erhalten wurde.

11. Verfahren nach einem der voranstehenden Ansprüche, dadurch gekennzeichnet, daß das Calciumcarbonat vor der Umsetzung mit Phosphorsäure in der siebten Stufe in der 1-bis 10-fachen, insbesondere der 2-bis 5-fachen Gewichtsmenge wäßriger Phase aufgeschlämmt wird.

12.Verfahren nach einem der voranstehenden Ansprüche, dadurch gekennzeichnet, daß zur Umsetzung des Calciumcarbonats mit der Phosphorsäure in der siebten Stufe zunächst eine verdünnte Phosphorsäurevorlage hergestellt wird und durch gleichzeitiges Zugeben von Calciumcarbonataufschlämmung und Phosphorsäure ein pH-Wert zwischen 2 -4,5 eingehalten wird.

13. Verfahren nach Anspruch 12, dadurch gekennzeichnet, daß zur Herstellung der Phosphorsäurevorlage eine handelsübliche 85 %ige $H_3PO_4$ mit der Mutterlauge der Calciumhydrogenphosphatfällung im Gewichtsverhältnis 1 : 10 -25 verdünnt wird.

14. Verfahren nach einem der voranstehenden Ansprüche, dadurch gekennzeichnet, daß als wäßrige Phase für die Herstellung der Calciumcarbonataufschlämmung in der siebten Stufe die Mutterlauge aus der Calciumhydrogenphosphatfällung eingesetzt wird.

15. Verfahren nach einem der Ansprüche 1 -14, dadurch gekennzeichnet, daß die Umsetzung von Calciumcarbonat und Phosphorsäure zur Herstellung von CaHPO$_4$. 2H$_2$O bei einer Temperatur von 0 bis 60°C, insbesondere bei 1o bis 5o°C, erfolgt.

16. Verfahren nach einem der Ansprüche 1 -14, dadurch gekennzeichnet, daß die Umsetzung von Calciumcarbonat und Phosphorsäure zur Herstellung von CaHPO$_4$ bei einer Temperatur oberhalb von 6o°C, insbesondere bei 7o bis 9o°C, erfolgt.